# EUROPEAN PATENT APPLICATION

(11) **EP 3 632 800 A1**
(43) Date of publication of application: **08.04.2020**
(21) Application number: 19188713.2
(22) Date of filing: 26.07.2019
(51) Int. Cl.: B64D 33/00, F01D 9/06, F02C 7/22, F16L 3/18, F16L 5/00, F16L 19/02

(54) **FLUID TUBE ASSEMBLY FOR GAS TURBINE ENGINE**

(30) Priority: 03.10.2018 US 201816150984
(71) Applicant: United Technologies Corporation, Farmington, CT 06032 (US)
(72) Inventor: SILVA, Daniel C., West Hartford, CT Connecticut 06119 (US); MORTON, Jeffrey T., Manchester, CT Connecticut 06040 (US); FIGUEROA, Carlos G., Wellington, FL Florida 33414 (US)
(74) Representative: Dehns

(57) **Abstract**

A fluid tube assembly includes a first fluid tube (102) extending through a duct liner (104), a portion of the first fluid tube disposed radially outward of the duct liner and a portion of the first fluid tube disposed radially inward of the duct liner. Also included is a second fluid tube (112) located radially inward of the duct liner. Further included is a clamp (120) located radially inward of the duct liner and having an inner wall defining an interior space. Yet further included is a nut (116) at least partially disposed within the interior space, the nut having an outer geometry corresponding to a geometry of a portion of the inner wall of the clamp, the first fluid tube and the second fluid tube each having a portion disposed within the nut, the clamp and the nut providing anti-rotation during assembly of the fluid tube assembly.

## Description

### STATEMENT OF FEDERAL SUPPORT

This invention was made with Government support under Contract No. FA8626-16-C-2139 awarded by the United States Air Force. The Government has certain rights in the invention.

### BACKGROUND

The invention relates to gas turbine engines and, more particularly, to a fluid tube assembly for gas turbine engines.

Fluid lines are necessary to route various fluids (e.g., fuel, air) throughout a gas turbine engine. Certain portions of fluid lines may be coupled to other portions of fluid lines and/or to engine structures. In some cases, access and visibility to the coupling interface during the time of assembly may be prevented, thereby precluding the use of conventional fluid connections. Such situations impose the challenge for the connection to be completed by torqueing an external portion of the tube.

### BRIEF DESCRIPTION

According to a first aspect of the invention there is provided a fluid tube assembly including a first fluid tube extending through a duct liner, a portion of the first fluid tube disposed radially outward of the duct liner and a portion of the first fluid tube disposed radially inward of the duct liner. Also included is a second fluid tube located radially inward of the duct liner. Further included is a clamp located radially inward of the duct liner and having an inner wall defining an interior space. Yet further included is a nut at least partially disposed within the interior space, the nut having an outer geometry corresponding to a geometry of a portion of the inner wall of the clamp, the first fluid tube and the second fluid tube each having a portion disposed within the nut, the clamp and the nut providing anti-rotation during assembly of the fluid tube assembly.

Optionally, the assembly may include a clamp annular ring extending inwardly from the inner wall of the clamp, the first fluid tube, the second fluid tube, and the nut free to move along a longitudinal direction of the first and second fluid tubes, the annular ring defining a movement limit for the first fluid tube, the second fluid tube, and the nut.

Optionally, the assembly may include a bushing disposed within the interior space of the clamp, the bushing located between the second fluid tube and the clamp.

Optionally, the bushing comprises a main portion and a bushing annular ring extending outwardly from the main portion at an end of the main portion.

Optionally, the first fluid tube and the second fluid tube are in contact at a tube interface within the nut.

Optionally, the tube interface is a conical interface comprising a first conical end of the first fluid tube and a second conical end of the second fluid tube.

Optionally, the first conical end and the second conical end are complementary angles, one of the conical ends oriented at about 37 degrees from a central axis of the first fluid tube and the second fluid tube.

Optionally, the nut is a B-nut.

Optionally, the clamp includes a first clamp side and a second clamp side, the first and second clamp sides mechanically fastened together in an assembled condition.

According to a second aspect of the invention, there is provided a gas turbine engine comprising: a compressor section; a combustion section; a turbine section; and a fluid tube assembly as recited herein with reference to the first aspect of the invention. The second fluid tube may have a second tube annular ring. The gas turbine engine may comprise a bushing disposed within the interior space of the clamp. The bushing may be located between the second fluid tube and the clamp. The bushing may comprise a main portion and a bushing annular ring extending outwardly from the main portion at an end of the main portion. The bushing annular ring may be positioned radially inward of a radially inner end of the clamp.

According to a third aspect of the invention there is provided a gas turbine engine including a compressor section, a combustion section, a turbine section, and a fluid tube assembly. The fluid tube assembly includes a first fluid tube extending through a duct liner, a portion of the first fluid tube disposed radially outward of the duct liner and a portion of the first fluid tube disposed radially inward of the duct liner. The fluid tube assembly also includes a second fluid tube located radially inward of the duct liner, the second fluid tube having a second tube annular ring. The fluid tube assembly further includes a clamp located radially inward of the duct liner and having an inner wall defining an interior space. The fluid tube assembly yet further includes a nut at least partially disposed within the interior space, the nut having an outer geometry corresponding to a geometry of a portion of the inner wall of the clamp, the first fluid tube and the second fluid tube each having a portion disposed within the nut. The fluid tube assembly also includes a bushing disposed within the interior space of the clamp, the bushing located between the second fluid tube and the clamp, the bushing comprising a main portion and a bushing annular ring extending outwardly from the main portion at an end of the main portion, the bushing annular ring positioned radially inward of a radially inner end of the clamp.

Optionally, the gas turbine engine may include a clamp annular ring extending inwardly from the inner wall of the clamp, the first fluid tube, the second fluid tube, and the nut free to move along a longitudinal direction of the first and second fluid tubes, the annular ring defining a movement limit for the first fluid tube, the second fluid tube, and the nut, movement in a first direction limited by contact between the annular ring and the nut, movement in a second direction limited by contact between the second tube annular ring and the bushing annular ring.

Optionally, the first fluid tube and the second fluid tube are in contact at a tube interface within the nut.

Optionally, the tube interface is a conical interface comprising a first conical end of the first fluid tube and a second conical end of the second fluid tube.

Optionally, the first conical end and the second conical end are complementary angles, one of the conical ends oriented at about 37 degrees from a central axis of the first fluid tube and the second fluid tube.

Optionally, the nut is a B-nut.

Optionally, the clamp is operatively coupled to a stationary structure.

Optionally, the stationary structure is at least one of a turbine exhaust case, an inner diffuser case, and a high pressure turbine case.

Optionally, the clamp is operatively coupled to the stationary structure with a plurality of brackets.

Optionally, the clamp includes a first clamp side and a second clamp side, the first and second clamp sides mechanically fastened together in an assembled condition.

The gas turbine engine may comprise a fluid tube assembly as recited herein with reference to the first aspect of the invention. The clamp and the nut may provide anti-rotation during assembly of the fluid tube assembly.

According to a fourth aspect of the invention there is provided a method of assembling a fluid tube assembly in a gas turbine engine. The method includes inserting a first fluid tube through a duct liner into a B-nut at least partially disposed within an interior space of a two-piece clamp and into contact with a second fluid tube at a conical fluid tube interface, the outer geometry of the B-nut corresponding to a geometry of a portion of an inner wall of the clamp. The method also includes torqueing the first fluid tube from a location radially outward of the duct liner.

The method may comprise assembling a fluid tube assembly as recited herein with reference to the first aspect of the invention. The method may comprise assembling a gas turbine engine as recited herein with reference to the second and/or third aspect of the invention.

### BRIEF DESCRIPTION OF THE DRAWINGS

The following descriptions should not be considered limiting in any way. With reference to the accompanying drawings, like elements are numbered alike:
FIG. 1 is a side, partial cross-sectional view of a gas turbine engine;
FIG. 2 is a cross-sectional view of a fluid tube assembly of the gas turbine engine;
FIG. 3 is a side view of a portion of the fluid tube assembly; and
FIG. 4 is a top view of the fluid tube assembly.

### DETAILED DESCRIPTION

A detailed description of one or more embodiments of the disclosed apparatus and method are presented herein by way of exemplification and not limitation with reference to the Figures.

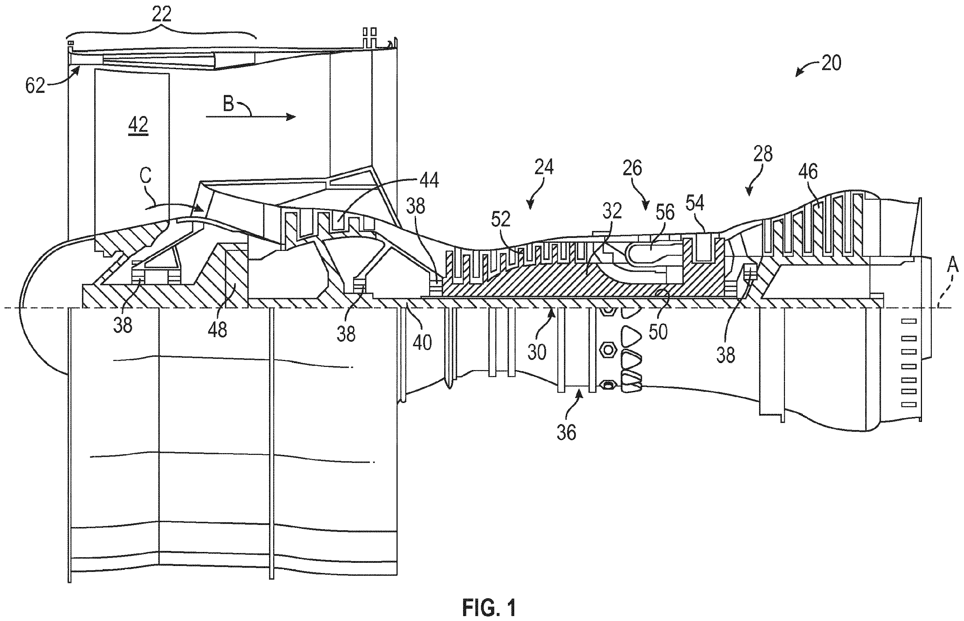

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8 Mach and about 35,000 feet (10,688 meters). The flight condition of 0.8 Mach and 35,000 feet (10,688 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

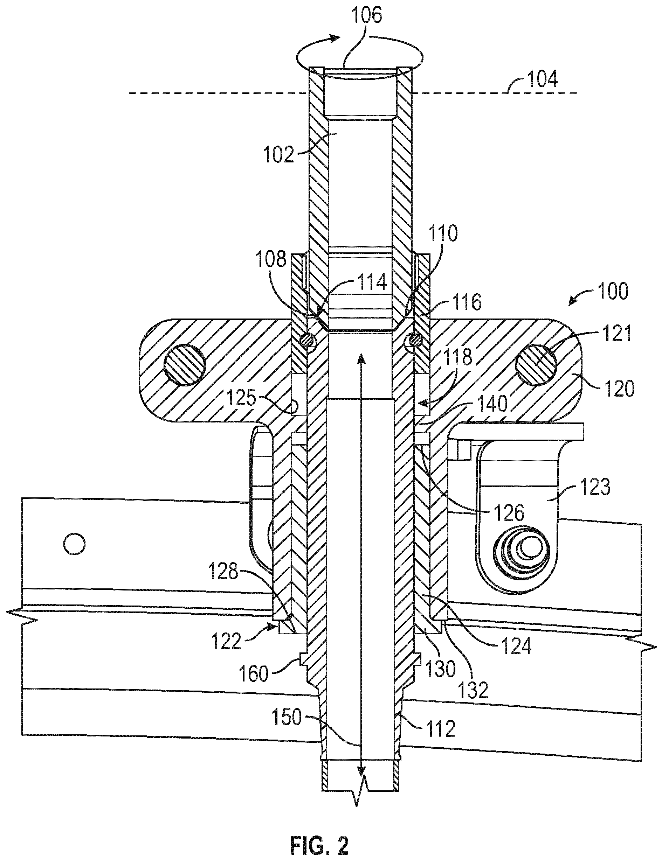

Referring to FIG. 2, a fluid tube assembly 100 of the gas turbine engine 20 is illustrated. The fluid tube assembly 100 may be utilized to route various contemplated fluids throughout the gas turbine engine 20. In one embodiment, the fluid tube assembly 100 routes fuel. The embodiments described herein are particularly advantageous for tube assemblies that require a "blind" assembly process. In particular, there is no access or visibility to the interface between two fuel line segments, or tubes. In such a situation, the connection must be completed by torqueing the tube (or tube segment) that is externally located, where access is available, as shown in FIG. 2. Some embodiments include the use of "jumper" tubes that interconnect fuel manifolds to fuel nozzles, for example.

FIG. 2 illustrates a portion of a first tube 102 that extends through a duct liner 104, thereby placing a portion of the first tube 102 radially outward of the duct liner 104 and a portion of the first tube 102 radially inwardly of the duct liner 104. A first end 106 of the first tube 102 is the portion located radially outward of the duct liner 104 and is the portion that is accessible for torqueing by an installation operator. A second end 108 of the first tube 102 is located radially inwardly of the duct liner 104 and is positioned to be adjacent a first end 110 of a second tube 112 at a tube interface 114. In the illustrated embodiment, the tube interface 114 is a conical interface, with the second end 108 of the first tube 102 and the first end 110 of the second tube 112 being conical ends with complementary angles. The angle of each end 108, 112 may vary, but in some embodiments, the angle of one of the ends ranges from about 35 degrees to about 40 degrees relative to the centerline axis of the first and second tubes 102, 112. In an embodiment, the angle of one of the ends is about 37 degrees. The conical interface facilitates initial installation orientation of the first tube 102 before torqueing the first tube 102 for coupling.

Coupling of these tubes 102, 112 is not manually accessible due to the tube interface 114 being located radially inwardly of the duct liner 104. The embodiments described herein facilitate such coupling, while also allowing for radial slip of the tube assembly to accommodate relative thermal growth between the coupling support components and the tubes.

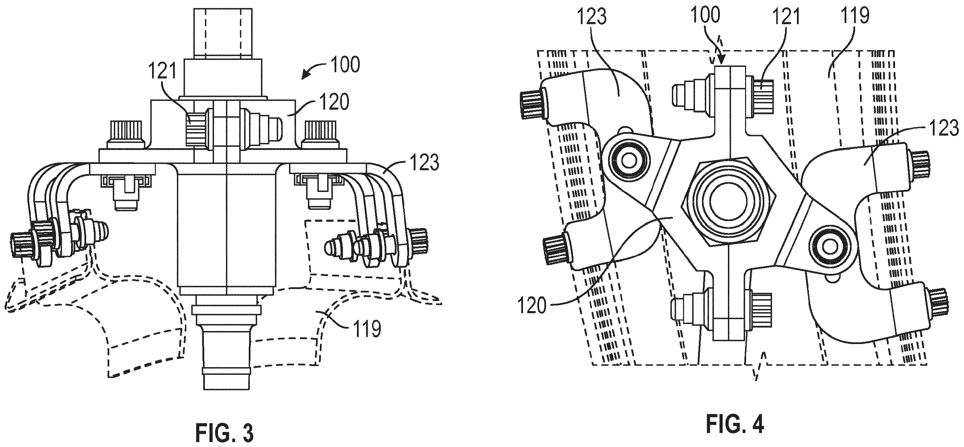

The second end 108 of the first tube 102 and the first end 110 of the second tube 112 are located within a nut, such as a B-nut 116, that is at least partially positioned within an interior space 118 of a clamp 120. The B-nut 116 described herein may be a thrust wire B-but or a captured B-nut. The clamp 120 may be formed of two halves that trap the B-nut 116 within the interior space 118. The halves of the clamp 120 are mechanically fastened to each other with one or more fasteners 121. The interior space 118 is defined by an inner clamp wall 125 that has a geometry that substantially corresponds to the outer geometry of the B-nut 116. This results in torqueing the first end 106 of the first tube 102 at the radially external location of the duct liner 104 to ensure coupling of the first tube 102 to the B-nut 116, as the B-nut remains stationary within the clamp 120. This is attributed to operative coupling of the clamp 120 to a relatively stationary structure 119 (FIGS. 3 and 4). Coupling is made with a plurality of brackets 123. The stationary structure may be one of various stationary structures that are substantially stationary relative to the clamp 120. For example, the stationary structure 119 may be a turbine exhaust case, an inner diffuser case, or a high pressure turbine case. The preceding list is merely illustrative and is not intended to be limiting of the stationary structures that may be utilized for mounting.

Due to the cooling effect that the fluid (e.g., fuel, air) has on the first and second tubes 102, 112 within a high temperature environment, the tube assembly 100 must be permitted to slide thermally relative to the clamp 120 and the stationary structure 119 in order to avoid thermally driven stress in the tube. A bushing 122, such as a carbon bushing, is disposed between the clamp 120 and the second tube 112 to act as a slip joint contact around the second tube 112 to allow for differential thermal growth between the tubing and the clamp 120. The bushing 122 includes a main portion 124 extending from a first end 126 to a second end 128. The main portion 124 is concentric with the second tube 112 and extends longitudinally along the longitudinal direction of the first and second tubes 102, 112. The bushing 122 also includes an annular ring 130 extending outwardly from the main portion 124 at the second end 128 of the main portion 124, the annular ring 130 positioned radially inward of a radially inner end 132 of the clamp 120 to be in abutment therewith. Alternatively, the annular ring 130 may be at a different position on the bushing 122, such as at the first end 126 of the main portion 124.

The clamp 120 includes a displacement limiting feature 140 extending inwardly toward the second tube 112. The displacement limiting feature 140 may be an annular ring or a lip that does not extend fully around the interior of the clamp 120. As described above, the first tube 102, the second tube 112 and the B-nut 116 are free to move radially in direction 150, as needed during relative thermal growth. The displacement limiting feature limits this movement to maintain the assembled condition of the assembly 100. In particular, movement in a first direction is limited by contact between the displacement limiting feature 140 and the B-nut 116, while movement in a second, opposite direction is limited by contact between an annular ring 160 of the second tube 112 and the annular ring 130 of the bushing 122. Annular ring 160 of the second tube 122 also serves to limit the motion of the bushing 122.

The embodiments described herein allow for B-nut connections to be completed when there is not access to the B-nut itself. The torque is transmitted remotely at the end of the tube on the male fitting side. Simultaneously, it allows the tubing to slide independently of the clamp itself which is beneficial for fluid cooled tubing in high temperature environments. The embodiments may benefit any fluid line that penetrates ducts with a jet engine and requires an intermediate separable fluid connection.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present invention defined by the appended claims. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A fluid tube assembly comprising:
a first fluid tube extending through a duct liner, a portion of the first fluid tube disposed radially outward of the duct liner and a portion of the first fluid tube disposed radially inward of the duct liner;
a second fluid tube located radially inward of the duct liner;
a clamp located radially inward of the duct liner and having an inner wall defining an interior space; and
a nut at least partially disposed within the interior space, the nut having an outer geometry corresponding to a geometry of a portion of the inner wall of the clamp, the first fluid tube and the second fluid tube each having a portion disposed within the nut, the clamp and the nut providing anti-rotation during assembly of the fluid tube assembly.

2. The fluid tube assembly of claim 1, further comprising a clamp annular ring extending inwardly from the inner wall of the clamp, the first fluid tube, the second fluid tube, and the nut free to move along a longitudinal direction of the first and second fluid tubes, the annular ring defining a movement limit for the first fluid tube, the second fluid tube, and the nut.

3. The fluid tube assembly of claim 1, further comprising a bushing disposed within the interior space of the clamp, the bushing located between the second fluid tube and the clamp; preferably
wherein the bushing comprising a main portion and a bushing annular ring extending outwardly from the main portion at an end of the main portion.

4. The fluid tube assembly of any preceding claim, wherein the first fluid tube and the second fluid tube are in contact at a tube interface within the nut; preferably
wherein the tube interface is a conical interface comprising a first conical end of the first fluid tube and a second conical end of the second fluid tube; and more preferably
wherein the first conical end and the second conical end are complementary angles, one of the conical ends oriented at about 37 degrees from a central axis of the first fluid tube and the second fluid tube.

5. The fluid tube assembly of any preceding claim, wherein the nut is a B-nut.

6. The fluid tube assembly of any preceding claim, wherein the clamp includes a first clamp side and a second clamp side, the first and second clamp sides mechanically fastened together in an assembled condition.

7. A gas turbine engine comprising:
a compressor section;
a combustion section;
a turbine section; and
a fluid tube assembly comprising:
a first fluid tube extending through a duct liner, a portion of the first fluid tube disposed radially outward of the duct liner and a portion of the first fluid tube disposed radially inward of the duct liner;
a second fluid tube located radially inward of the duct liner, the second fluid tube having a second tube annular ring;
a clamp located radially inward of the duct liner and having an inner wall defining an interior space;
a nut at least partially disposed within the interior space, the nut having an outer geometry corresponding to a geometry of a portion of the inner wall of the clamp, the first fluid tube and the second fluid tube each having a portion disposed within the nut; and
a bushing disposed within the interior space of the clamp, the bushing located between the second fluid tube and the clamp, the bushing comprising a main portion and a bushing annular ring extending outwardly from the main portion at an end of the main portion, the bushing annular ring positioned radially inward of a radially inner end of the clamp.

8. The gas turbine engine of claim 7, further comprising a clamp annular ring extending inwardly from the inner wall of the clamp, the first fluid tube, the second fluid tube, and the nut free to move along a longitudinal direction of the first and second fluid tubes, the annular ring defining a movement limit for the first fluid tube, the second fluid tube, and the nut, movement in a first direction limited by contact between the annular ring and the nut, movement in a second direction limited by contact between the second tube annular ring and the bushing annular ring.

9. The gas turbine engine of claim 7 or 8, wherein the first fluid tube and the second fluid tube are in contact at a tube interface within the nut; preferably
wherein the tube interface is a conical interface comprising a first conical end of the first fluid tube and a second conical end of the second fluid tube; and more preferably
wherein the first conical end and the second conical end are complementary angles, one of the conical ends oriented at about 37 degrees from a central axis of the first fluid tube and the second fluid tube.

10. The gas turbine engine of claim 7, 8 or 9, wherein the nut is a B-nut.

11. The gas turbine engine of any of claims 7 to 10, wherein the clamp is operatively coupled to a stationary structure.

12. The gas turbine engine of claim 11, wherein the stationary structure is at least one of a turbine exhaust case, an inner diffuser case, and a high pressure turbine case.

13. The gas turbine engine of claim 11 or 12, wherein the clamp is operatively coupled to the stationary structure with a plurality of brackets.

14. The gas turbine engine of any of claims 7 to 13, wherein the clamp includes a first clamp side and a second clamp side, the first and second clamp sides mechanically fastened together in an assembled condition.

15. A method of assembling a fluid tube assembly in a gas turbine engine comprising:
inserting a first fluid tube through a duct liner into a B-nut at least partially disposed within an interior space of a two-piece clamp and into contact with a second fluid tube at a conical fluid tube interface, the outer geometry of the B-nut corresponding to a geometry of a portion of an inner wall of the clamp; and
torqueing the first fluid tube from a location radially outward of the duct liner.
